# EUROPEAN PATENT SPECIFICATION

(11) **EP 2 951 338 B1**
(45) Date of publication and mention of the grant of the patent: **28.09.2016**
(21) Application number: 14703298.1
(22) Date of filing: 23.01.2014
(51) Int. Cl.: D01D 5/088, B01D 39/20, B22F 3/00, D01D 13/02

(54) **QUENCH TUBE FOR POLYMER FIBER EXTRUSION**
ABKÜHLRÖHRE FÜR DIE POLYMERFASEREXTRUSION
TUBE DE REFROIDISSEMENT POUR EXTRUSION DE FIBRES POLYMÈRES

(30) Priority: 04.02.2013 EP 13153817
(43) Date of publication of application: 09.12.2015
(73) Proprietor: NV Bekaert SA, 8550 Zwevegem (BE)
(72) Inventor: VERSCHAEVE, Frank, B-8553 Otegem (BE); VANDENDIJK, Stefan, B-3700 Tongeren (BE); NGUYEN, Marie, 2600 Berchem (BE); DEBAERDEMAEKER, Jérémie, B-8791 Beveren-Leie (BE)
(74) Representative: Vangheluwe, Lieven Germain L.
(86) International application number: PCT/EP2014/051337
(87) International publication number: WO 2014/118080

(56) References cited:
- CN-Y- 2 528 783
- JP-A- 2010 077 553
- US-A- 3 135 811
- US-B1- 6 410 878

## Description

### Technical Field

The invention relates to the field of quench tubes used in polymer fiber or polymer filament extrusion, and to a method to manufacture such quench tubes.

### Background Art

The use of quench tubes in polymer fiber extrusion is known, e.g. in the extrusion process for producing POY (Partially Oriented Yarn) or FDY (Fully Drawn Yarn) polyester multifilament yarns. After extrusion, the fibers or filaments pass through a quench zone which comprises one or more quench tubes. Through the walls of the quench tube, from the inside out or from the outside in - air is led that cools and sometimes also draws the fibers or filaments.

Different types of quench tubes exist and have been described.

GB1382499 mentions quench tubes made of a porous material, such as ceramic or sintered metal powder. Sintered bronze powder is indicated as a specific example for quench tubes.

EP1491663 lists quench tubes manufactured from multilayer cellulose, multilayer wire netting, sintered metal powder or ceramics, and multilayer perforated plate.

CN2861195 describes a quench tube consisting out of an outer layer of a perforated metal tube and an inner layer of a twill weave metal wire mesh.

CN2528783Y describes a quench tube consisting out of an inner layer of a perforated stainless steel sheet of porosity 12-15%, a number of layers of woven stainless steel wire meshes of porosity 25-35%, and an outer layer of a perforated stainless steel sheet of porosity 22-30%.

An example of a commercially available quench tube is made of a helically wound cellulose paper or nonwoven ribbon impregnated with phenolic resin which is heat cured to form a paper quench tube. The air distribution occurs through the innumerable minute gaps formed between the layers of helically wound ribbon. The numerous distributed pores run straight from the outer circumference to the inner core of the quench tube.

Quench tubes have to allow uniform distribution of air over their full surface. It is a problem of the quench tubes of the prior art that the quench tubes are not optimal in terms of uniformity of distribution of air.

### Disclosure of Invention

The primary object of the invention is to provide an improved quench tube. It is a specific objective to provide a quench tube that provides an improved and excellent uniformity of the flow distribution over its full outflow surface.

A first aspect of the invention is a quench tube for quenching polymer fibers in fiber extrusion. Such polymer fibers can be filaments or staple fibers. The quench tube comprises a cylindrical wall through which quenching air flows when the quench tube is in use. The cylindrical wall can have a circular cross section, or another cross sectional shape such as elliptical. The cylindrical wall comprises metal fibers in a nonwoven fiber structure. The metal fibers are bonded to each other at contacting points by means of metallurgical bonds thereby forming a three dimensionally bonded fiber structure.

Quench tubes according to the invention have the benefit that they have an excellent uniformity of the quench flow over the full outflow surface of the quench tube, in combination with a low pressure drop. It is possible to make quench tubes that are shorter than the quench tubes of the prior art. Quench tubes with metal wire meshes and/or perforated metal sheets have less pores and the pores are of higher sizes. Such quench tubes also have an important discontinuity at joining edges of the metal wire meshes and/or perforated metal sheets; both aspects result in a nonuniform quench flow compared to the quench tube of the invention.

It is a further benefit that the quench tubes of the invention can be cleaned while maintaining after cleaning the excellent uniformity of quench flow distribution. Quench tubes with metal wire meshes and/or perforated metal sheets can also be cleaned, however, after cleaning, the quench flow is even less uniform than before cleaning. This is believed to be because of the different size of number of pores in the quench tube of the prior art compared to the quench tube of the invention. The quench tube of the invention has a large number of small pores, therefore a remaining soil particle after cleaning has less effect on the flow distribution as the quench air flow can find more easily a path around the pore with the remaining soil particle.

It is a further benefit of quench tubes of the invention that they are inflammable. Quench tubes made of a helically wound cellulose paper or nonwoven ribbon impregnated with phenolic resin which is heat cured are flammable.

For the invention, preferred are metallurgical bonding techniques in which no additional bonding material or bonding agent is added, but where only the metal fibers are used to create the bonding. Examples of such metallurgical bonds are sinter bonds (in which a bond is created by means of diffusion between contacting fibers in a sintering process) or welded bonds (where contacting fibers are bonded by means of local melting and re-solidifying). An example of an appropriate welding technique is capacity discharge welding (CDW).

Preferred are metal fibers with an equivalent fiber diameter between 2 and 40 micrometer, more preferred are metal fibers with an equivalent fiber diameter between 12 and 40 micrometer, even more preferred are metal fibers with an equivalent fiber diameter between 18 and 25 micrometer. Such quench tubes have even better quenching results, in terms of distribution of quenching air.

With equivalent diameter of a fiber is meant the diameter of a circle that is having the same area as the cross section of the fiber.

In a preferred embodiment, a majority of the metal fibers at least partially encircle the axis of the quench tube. Preferably at least 50 percent, and more preferably at least 85 percent of the fibers at least partially encircling the axis.

With a metal fiber at least partially encircles the axis of the quench tube is meant that it passes partially around this axis. This can be seen and measured by making a cross section perpendicular to the axis of the cross section and observing the projection line of the fibers on a plane perpendicular to the axis of the quench tube. A metal fiber is at least partially encircling the axis when the projection line of the fiber on the plane perpendicular to the axis of the cross section is concave towards the axis; and when the projection line is for 360° degrees encircling the axis and/or when the projection line is longer than half of the length of the fiber in case of staple fibers.

Preferred are stainless steel fibers. Even more preferred are stainless steel fibers according to AISI 304 or AISI 316.

The metal fibers can e.g. have a circular or a polygonal cross section, e.g. a rectangular or a hexagonal cross section.

The metal fibers can e.g. be produced via single end drawing, via bundled drawing (see e.g. in US-A-2050298, US-A-3277564 and in US-A-3394213) - particularly interesting for producing stainless steel fibers -, via shaving (see e.g. in US-A-4930199), via machining or via extrusion from a melt. A hexagonal cross section of the fibers is preferred. Metal fibers, and especially stainless steel fibers, with hexagonal cross section can be obtained via the bundled drawing production technology.

In a preferred embodiment, the metal fibers are part of a fiber structure which is coiled around the central axis of the quench tube.
- such fiber structure can be a staple fiber structure.
- such fiber structure can also be a nonwoven fiber web, comprising staple fibers or filaments (fibers of virtually infinite length). When such fiber structure is a nonwoven fiber web, it is preferred when it has - in the quench tube - the width of the quench tube. The number of layers coiled can e.g. be 10 to 100, preferably 20 to 45, more preferably 20 to 40.
- such a fiber structure can also comprise at least one fiber bundle, preferably with endless metal fibers or with metal fibers having an average length between 4 and 30 cm, and preferably with crimped metal fibers.

Preferably such fiber bundle is a combination of metal fibers all oriented substantially in the length direction of the fiber bundle. An example is a bundle of crimped metal filaments (fibers of virtually infinite length). Preferably the coiling is performed building up a number of layers over the wall thickness of the quench tube, e.g. 10 to 100 layers, preferably 20 to 45 layers, more preferably 20 to 40 layers.

Such coiling contributes to the improvement of the uniformity of quench air distribution over the outflow surface of the quench tube.

When using staple fibers for the different embodiments of the invention, preferred staple fibers have an average length ranging from 0.6 cm to 6 cm.

A preferred porosity range of the quench tube of the invention in order to obtain a quench tube with excellent quench air distribution is within the range of 60% to 95%; more preferably 85 to 95 %.

In an even more preferred embodiment, the cylindrical wall of the quench tube is over its full wall thickness consisting out of the metal fibers in a nonwoven fiber structure. Such a quench tube has shown to provide the best results in terms of uniformity of the quench air distribution.

A preferred wall thickness range of the quench tube is 5 to 25 mm, more preferred 5 to 10 mm.

A second aspect of the invention is a method to make a quench tube as in the first aspect of the invention. The method comprises the steps of
- providing an elongated metal fiber structure,
- coiling the elongated metal fiber structure, around a core (e.g. around a reel), in order to obtain a cylindrical shape of the coiled elongated metal fiber structure. Preferably the coiling is performed building up a number of layers over the wall thickness of the quench tube.
- metallurgically bonding the so-obtained cylindrical shape in order to create metallurgical bonds (e.g. sinter bond by means of sintering; or welded bonds by means of welding, e.g. by means of capacitor discharge welding) at contacting points between metal fibers, and
- remove the core.

The method is an economic way of making a quench tube of good uniformity of quench flow. Such coiling contributes to the improvement of the uniformity of quench air distribution over the outflow surface of the quench tube.

In a specific embodiment of the method, the method comprises the steps of
- providing a mesh having at least a mesh leading edge;
- before metallurgically bonding the metal fiber structure obtained by coiling, cylindrically winding said mesh around said wound fiber structure, parallel to said mesh leading edge;
- removing said mesh from around said metallurgically bonded cylindrical shape.

In a specific embodiment of the method, the elongated metal fiber structure is a metal fiber nonwoven web having at least a leading edge;
and the metal fiber nonwoven web is cylindrically wound, parallel to said leading edge, until the predetermined diameter is obtained. Preferred is when the width of the web is equal or larger than the quench tube that is to be made.

E.g. 10 to 100, preferably 20 to 50, more preferably 20 to 45 layers, more preferably 20 to 40 can be obtained in the quench tube in coiling the metal fiber nonwoven web.

The metal fiber nonwoven web can e.g. comprise staple metal fibers or metal fiber filaments.

In another specific embodiment of the method the metal fiber structure is comprising a metal fiber bundle or is a metal fiber bundle. Preferably such a fiber bundle is a combination of metal fibers all oriented substantially in the length direction of the fiber bundle. An example is a bundle of crimped metal filaments (fibers of virtually infinite length).

The fiber bundle or fiber bundles can be wrapped around the core, whereby the wrapping is moved along the axis of the core in order to build up the quench tube.

A third aspect of the invention is a polymer fiber extrusion apparatus, comprising a quench tube as in the first aspect of the invention, installed at the extrusion die of the extrusion apparatus, in order to quench the polymer fibers or polymer filaments after their extrusion. The polymer fiber extrusion apparatus can have a flow of the quenching air inside out the quench tube or outside in the quench tube.

For use in extrusion apparatuses that have an inside - out flow of the quench air, internal diameters of the quench tube in the range of 60 to 165 mm are preferred, even more preferably 60 to 100 mm. For use in extrusion apparatus that have an outside - in flow of the quench air, internal diameters of the quench tube in the range of 200 to 350 mm are preferred.

### Brief Description of Figures in the Drawings

Figure 1 shows an example of a quench tube according to the invention.
Figure 2 shows an example of a polymer fiber extrusion apparatus comprising a quench tube of the invention.

### Mode(s) for Carrying Out the Invention

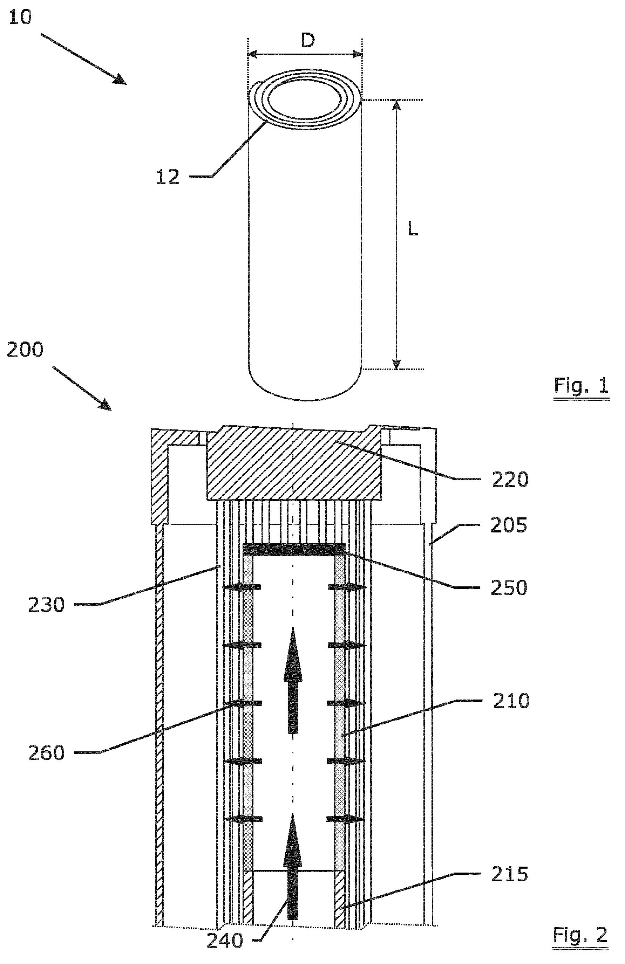

Figure 1 shows an example of a quench tube 10 according to the invention. L indicates the length of the quench tube, e.g. 150 mm and D its outer diameter. It is made via circular winding (coiling) of a unsintered nonwoven stainless steel fiber web around a core (e.g. around a reel) of the appropriate diameter. A carded, air-laid or wet-laid nonwoven stainless steel fiber web can advantageously be used. The web is wound to obtain a number of layers 12 until the required diameter of the cylindrical shape of the coiled elongated metal fiber structure for the quench tube is obtained. The amount of layers used contributes to obtain the uniform quench air distribution over the outflow surface of the quench tube. The metal fibers of this coiled elongated metal fiber structure are then metallurgically bonded, e.g. by means of sintering or by means of welding without use of additional bonding material. Such welding can e.g. be done by means of capacitor discharge welding. The core is removed afterwards.

Stainless steel fibers according to AISI 304 or AISI 316 can be used. Such fibers can be bundle drawn fibers, singe end drawn wires, shaved fibers or machined fibers. Examples of equivalent diameter of fibers that can e.g. be used are 20 micrometer, 22 micrometer, 30 micrometer or 40 micrometer.

Quench tubes with a wall thickness of 10 mm have been made. Using a stainless steel fiber web with a weight of 300 g/m², when coiling 27 layers and to a wall thickness of 10 mm; a porosity of the quench tube of 90% was obtained.

Using a stainless steel fiber web with a weight of 300 g/m², when coiling 21 layers and to a wall thickness of 10 mm; a porosity of the quench tube of 92% was obtained.

Using a stainless steel fiber web with a weight of 300 g/m², when coiling 40 layers and to a wall thickness of 10 mm; a porosity of the quench tube of 85% was obtained.

An example is a quench tube with internal diameter 86 mm and outer diameter D 106 mm.

The uniformity of quench air flow has been tested using a pressure sensor at the exit of the quench tube. The pressure sensor was located at different positions along the length of the quench tube and along the circumference of the cross section and measurements of the air pressure were performed.

The quench tubes of the invention have shown to provide a remarkable uniform distribution of air over their full surface, along the length of the quench tube as well as along the circumference of cross sections perpendicular to the axis of the quench tube. The remarkably uniform distribution of air was maintained after cleaning by treatment in hot solvent to remove impurities from the quench tube trapped in it during its use.

Other tests showed that compared to a quench tube made of a helically wound cellulose paper or nonwoven ribbon impregnated with phenolic resin which is heat cured afterwards, the uniform distribution of quench air flow could be obtained at a lower air pressure.

Figure 2 shows an example of a polymer fiber extrusion apparatus comprising a quench tube of the invention. The extrusion apparatus 200 comprises a frame 205, a quench tube 210 according to the invention, e.g. as shown in figure 1 and as described in the examples, on supporting tubing 215 and an extrusion die 220. Polymer filaments 230 are extruded through the extrusion die 220. Such filaments 230 can be cut afterwards to provide staple fibers, or collected for further use as filaments of virtually infinite length. Quench air is supplied through piping 215 in the direction of arrow 240 to the quench tube 210. The quench tube 210 has an end cap 250 to close off the quench tube 210 at its end opposite to the entrance of the quench air in the quench tube 210. Such end cap 250 can be a plastic or metal disc that is removably put at the end of the quench tube 210. The quench air flows in the direction of arrows 260 through the quench tube 210 quenching the filaments 230.

By removing the quench tube 210 out of the extrusion apparatus 200 and removing the end cap 250, it is possible to clean the quench tube 210 of the invention, e.g. by washing in a solvent at elevated temperatures which can be in the range of 280 - 400 °C.

Figure 2 shows an example of an extrusion apparatus in which the quench tube has an inside - out air quench flow. In a similar way extrusion apparatuses can be equipped with a quench tube of the invention with an outside - in quench flow, wherein the filaments are extruded inside the quench tube.

## Claims

1. Quench tube for quenching polymer fibers in fiber extrusion,
- wherein said quench tube comprises a cylindrical wall through which quenching air flows when the quench tube is in use;
- wherein said cylindrical wall comprises metal fibers in a nonwoven fiber structure; and
- wherein said metal fibers are bonded to each other at contacting points by means of metallurgical bonds thereby forming a three dimensionally bonded fiber structure.

2. Quench tube as in claim 1, wherein a majority of said metal fibers at least partially encircle the axis of said cylindrical wall.

3. A quench tube as in claims 1 or 2, wherein said metal fibers are part of a fiber structure, which is coiled around the central axis of the quench tube.

4. A quench tube as in claim 3, wherein the number of layers coiled are between 10 and 100, preferably between 20 and 45, more preferably between 20 and 40.

5. A quench tube as in any of the claims 3 or 4, wherein the fiber structure is a nonwoven fiber web.

6. A quench tube as in any of the claims 3 to 5, wherein the fiber structure comprises at least one fiber bundle.

7. A quench tube as in any of the preceding claims, wherein the porosity of the quench tube is within the range of 60 to 95 %.

8. A quench tube as in any of the preceding claims, wherein said cylindrical wall is over its full wall thickness consisting out of said metal fibers in a nonwoven fiber structure.

9. A method to manufacture a quench tube as in claims 1 to 8, comprising the steps of
- providing an elongated meta! fiber structure,
- coiling said elongated metal fiber structure around a core, in order to obtain a cylindrical shape of the coiled elongated metal fiber structure,
- metallurgically bonding the so-obtained cylindrical shape in order to create metallurgical bonds at contacting points between metal fibers, and
- removing the core.

10. A method as in claim 9, wherein the coiling is performed building up a number of layers over the wall thickness of the quench tube.

11. A method as in claims 9 or 10, wherein the elongated metal fiber structure is a metal fiber nonwoven web having at least a leading edge; and the metal fiber nonwoven web is cylindrically wound, parallel to said leading edge, until the predetermined diameter is obtained.

12. A method as in claim 11, wherein 10 to 100 layers are obtained in the quench tube in coiling the metal fiber nonwoven web.

13. A method as in any of the claims 9 to 12, wherein said method comprises the steps of
- providing a mesh having at least a mesh leading edge;
- before metallurgically bonding the fiber structure, cylindrically winding said mesh around said wound fiber structure, parallel to said mesh leading edge;
- removing said mesh from around said metallurgically bonded cylindrical shape.

14. Polymer fiber extrusion apparatus, comprising a quench tube as in claims 1 to 8, installed at the extrusion die of said extrusion apparatus, in order to quench the polymer fibers or polymer filaments after their extrusion.

## Patentansprüche

1. Anblasrohr zur Anblasung von extrusionsmäßig ausgeformten Kunststofffasern,
- wobei das Anblasrohr eine zylinderförmige Wandung umfasst, durch die im Einsatz des Anblasrohrs die Anblasluft hindurch strömt,
- wobei die zylinderförmige Wandung Metallfasern als ungewebtes Fasergebilde umfasst und
- wobei die Metallfasern unter Ausbildung eines dreidimensional verbundenen Fasergebildes miteinander an ihren Berührungspunkten metallurgisch verbunden sind.

2. Anblasrohr nach Anspruch 1, bei dem die Metallfasern in der Mehrzahl die Achse der zylinderförmigen Wandung zumindest partiell umkreisen.

3. Anblasrohr nach Anspruch 1 oder 2, bei dem die Metallfasern Teil eines die Mittelachse des Anblasrohrs umwickelnden Fasergebildes sind.

4. Anblasrohr nach Anspruch 3, bei dem die Anzahl der Wickellagen zwischen 10 und 100, bevorzugt zwischen 20 und 45 und besonders bevorzugt zwischen 20 und 40 beträgt.

5. Anblasrohr nach einem der Ansprüche 3 oder 4, bei dem es sich bei dem Fasergebilde um ein Faservlies handelt.

6. Anblasrohr nach einem der Ansprüche 3 bis 5, bei dem das Fasergebilde mindestens ein Faserbündel umfasst.

7. Anblasrohr nach einem der vorhergehenden Ansprüche mit einer Porosität im Bereich von 60 bis 95%.

8. Anblasrohr nach einem der vorhergehenden Ansprüche, bei dem die zylinderförmige Wandung über ihre gesamte Wandstärke aus den Metallfasern in Form eines ungewebten Fasergebildes besteht.

9. Verfahren zur Herstellung eines Anblasrohrs gemäß den Ansprüchen 1 bis 8 umfassend die Schritte
- ein längliches Metallfasergebilde bereitstellen,
- das längliche Metallfasergebilde um einen Kern wickeln, um so für das gewickelte längliche Metallfasergebilde eine zylinderförmige Gestalt zu erstellen,
- die so erstellte zylinderförmige Gestalt metallurgisch verbinden, um die Metallfasern an ihren Berührungspunkten mit metallurgischen Verbindungen zu versehen, und
- den Kern entfernen.

10. Verfahren nach Anspruch 9, bei dem man beim Wickeln eine Anzahl an Lagen über die Wandstärke des Anblasrohrs aufbaut.

11. Verfahren nach den Ansprüchen 9 oder 10, bei dem man als längliches Metallfasergebilde ein über wenigstens eine Vorderkante verfügendes Metallfaservlies bereitstellt und parallel zur Vorderkante zylinderförmig bis zum vorbestimmten Durchmesser wickelt.

12. Verfahren nach Anspruch 11, bei dem man mit dem Metallfaservlies 10 bis 100 Lagen im Anblasrohr erwickelt.

13. Verfahren nach einem der Ansprüche 9 bis 12, umfassend die Schritte
- ein Netz mit wenigstens einer Netzvorderkante bereitstellen,
- vor dem metallurgischen Verbinden des Fasergebildes das Netz zylinderförmig parallel zur Netzvorderkante um das gewickelte Fasergebilde wickeln,
- um die metallurgisch verbundene zylinderförmige Gestalt herum das Netz entfernen.

14. Vorrichtung zur extrusionsmäßigen Ausformung von Kunststofffasern mit einem an der Extrusionsdüse der Vorrichtung eingebauten Anblasrohr gemäß den Ansprüchen 1 bis 8 zur Anblasung der Kunststofffasern oder -filamente nach ihrer extrusionsmäßigen Ausformung.

## Revendications

1. Tube de refroidissement destiné à refroidir des fibres polymères lors de l'extrusion de fibres,
- ledit tube de refroidissement comprenant une paroi cylindrique par laquelle de l'air de refroidissement s'écoule quand le tube de refroidissement est en cours d'utilisation ;
- ladite paroi cylindrique comprenant des fibres métalliques dans une structure fibreuse non tissée ; et
- lesdites fibres métalliques étant liées les unes aux autres à des points de contact au moyen de liaisons métallurgiques, en formant de ce fait une structure fibreuse liée en trois dimensions.

2. Tube de refroidissement selon la revendication 1, dans lequel une majorité desdites fibres métalliques entoure au moins en partie l'axe de ladite paroi cylindrique.

3. Tube de refroidissement selon les revendications 1 ou 2, lesdites fibres métalliques faisant partie d'une structure fibreuse, qui est enroulée autour de l'axe central du tube de refroidissement.

4. Tube de refroidissement selon la revendication 3, dans lequel le nombre de couches enroulées est de 10 à 100, préférablement de 20 à 45, plus préférablement de 20 à 40.

5. Tube de refroidissement selon l'une quelconque des revendications 3 ou 4, dans lequel la structure fibreuse est une nappe fibreuse non tissée.

6. Tube de refroidissement selon l'une quelconque des revendications 3 à 5, dans lequel la structure fibreuse comprend au moins un faisceau de fibres.

7. Tube de refroidissement selon l'une quelconque des revendications précédentes, la porosité du tube de refroidissement étant de 60 à 95 %.

8. Tube de refroidissement selon l'une quelconque des revendications précédentes, dans lequel ladite paroi cylindrique est constituée, sur toute l'épaisseur de la paroi, desdites fibres métalliques dans une structure fibreuse non tissée.

9. Procédé de fabrication d'un tube de refroidissement selon les revendications 1 à 8, comprenant les étapes qui consistent à :
- fournir une structure fibreuse métallique allongée,
- enrouler ladite structure fibreuse métallique allongée autour d'un noyau, afin de donner une forme cylindrique à la structure fibreuse métallique allongée enroulée,
- lier la forme cylindrique ainsi obtenue par un procédé métallurgique afin de créer des liaisons métallurgiques à des points de contact entre les fibres métalliques, et
- retirer le noyau.

10. Procédé selon la revendication 9, dans lequel l'enroulement est réalisé par accumulation d'un certain nombre de couches par-dessus l'épaisseur de paroi du tube de refroidissement.

11. Procédé selon les revendications 9 ou 10, dans lequel la structure fibreuse métallique allongée est une nappe fibreuse métallique non tissée comportant au moins un bord avant ; et la nappe fibreuse métallique non tissée est enroulée en cylindre, parallèlement audit bord avant, jusqu'à l'obtention du diamètre prédéterminé.

12. Procédé selon la revendication 11, dans lequel 10 à 100 couches sont obtenues dans le tube de refroidissement en enroulant la nappe fibreuse métallique non tissée.

13. Procédé selon l'une quelconque des revendications 9 à 12, ledit procédé comprenant les étapes qui consistent à :
- fournir une maille comportant au moins un bord avant de maille ;
- avant de lier la structure fibreuse par un procédé métallurgique, enrouler en cylindre ladite maille autour de ladite structure fibreuse enroulée, parallèlement au bord avant de ladite maille ;
- retirer ladite maille du pourtour de ladite forme cylindrique liée par un procédé métallurgique.

14. Appareil d'extrusion de fibres polymères, comprenant un tube de refroidissement selon les revendications 1 à 8, installé au niveau de la filière d'extrusion dudit appareil d'extrusion, afin de refroidir les fibres polymères ou les filaments polymères après leur extrusion.
